# FASCICULE DE BREVET EUROPEEN

(11) **EP 2 989 892 B1**
(45) Date de publication et mention de la délivrance du brevet: **29.05.2019**
(21) Numéro de dépôt: 15181670.9
(22) Date de dépôt: 20.08.2015
(51) Int. Cl.: A01K 31/16

(54) **NID INDIVIDUEL DE PONTE POUR ANIMAUX ET PROCEDE DE COMMANDE DES MOYENS DE FERMETURE DUDIT NID**
INDIVIDUELLES LEGENEST FÜR TIERE, UND STEUERVERFAHREN DER VERSCHLUSSMITTEL FÜR DIESES LEGENEST
INDIVIDUAL LAYING NEST FOR ANIMALS AND METHOD FOR CONTROLLING MEANS FOR CLOSING SAID NEST

(30) Priorité: 29.08.2014 FR 1458103
(43) Date de publication de la demande: 02.03.2016
(73) Titulaire: Gourmaud Selection, 85260 Saint-André-Treize-Voies (FR)
(72) Inventeur: GOURMAUD, Benoît, 44100 Nantes (FR); ALLETRU, Bernard, 85600 Montaigu (FR)
(74) Mandataire: Godineau, Valérie

(56) Documents cités:
- US-A- 2 299 680
- US-A- 3 166 047
- US-A- 4 889 076
- US-A- 5 125 362

## Description

La présente invention concerne un nid individuel de ponte pour animaux pondeurs ainsi qu'un procédé de commande d'ouverture et de fermeture de moyens de fermeture de l'ouverture d'accès d'une cellule d'un tel nid.

Elle concerne plus particulièrement un nid du type précité comprenant une cellule munie d'une ouverture d'accès, des moyens de fermeture de l'ouverture d'accès de ladite cellule et des moyens d'évacuation des oeufs à l'extérieur de ladite cellule.

De plus en plus, les nids individuels de ponte sont recommandés pour le bien être des animaux. Toutefois, jusqu'à présent, de tels nids sont peu utilisés car ils nécessitent de pouvoir maîtriser la présence d'un seul animal dans le nid sans réduire, du fait de cette maîtrise, le taux de fréquentation du nid.

Ainsi, dans le document US-3.166.047, il est décrit un nid équipé de moyens de fermeture de l'ouverture d'accès au nid et de moyens de rappel de ces moyens de fermeture en position fermée. Les moyens de fermeture sont configurés pour pouvoir occuper deux positions de fermeture du nid. Du fait de la conception des moyens de rappel et des moyens de fermeture, le nid ne comporte pas de position ouverte stable mais deux positions de fermeture du nid, les moyens de rappel permettant en coopération avec l'animal de permettre aux moyens de fermeture de passer d'une position de fermeture à une autre en passant par une position intermédiaire instable dans laquelle l'animal peut entrer ou sortir de la cage. Du fait de l'absence de moyens de commande en ouverture des moyens de fermeture en l'absence de la présence d'un animal, les moyens de fermeture sont toujours en position normalement fermée.

US-5.125.362 décrit quant à lui un nid équipé d'un détecteur de présence pour mesurer la durée de présence d'un animal dans le nid.

Un but de la présente invention est de proposer un nid du type précité dont la conception permet de limiter les risques de présence de plusieurs animaux à la fois dans le nid sans nuire au taux de fréquentation du nid.

A cet effet, l'invention a pour objet un nid individuel de ponte pour animaux pondeurs comme défini dans la revendication 1.

Grâce à la présence d'une part, de moyens de commande en ouverture et de moyens de commande en fermeture à action positive sur les moyens de fermeture et d'autre part, d'un capteur de présence d'un animal à l'intérieur de la cellule et d'un capteur de détection de poussée, il en résulte la possibilité :
- en position ouverte des moyens de fermeture, dès la détection dans l'entrée d'un animal dans la cellule, de fermer très rapidement les moyens de fermeture grâce aux moyens de commande en fermeture pour éviter l'entrée successive desdits animaux dans la cellule, et
- en position fermée des moyens de fermeture, d'assister l'animal dans l'opération d'ouverture des moyens de fermeture et de faciliter ainsi l'ouverture des moyens de fermeture dès que l'animal manifeste la volonté de sortir de la cellule.

De préférence, les moyens de commande en ouverture et les moyens de commande en fermeture des moyens de fermeture sont au moins partiellement communs.

De préférence, le capteur de détection de poussée est intégré aux moyens de commande en fermeture.

Il en résulte une simplicité de l'ensemble et un encombrement réduit.

Selon l'invention, les moyens de commande en ouverture et les moyens de commande en fermeture des moyens de fermeture comprennent un actionneur de préférence du genre vérin.

Selon l'invention, les moyens de commande en ouverture et les moyens de commande en fermeture des moyens de fermeture comprennent un actionneur associé à un distributeur à trois positions, les moyens de commande en ouverture étant formés par l'actionneur et le distributeur en première position tandis que les moyens de commande en fermeture sont formés par l'actionneur et le distributeur en deuxième et en troisième positions.

De préférence, l'actionneur est un vérin double effet comprenant un corps, un piston, une tige de piston.

De préférence, le capteur de détection de poussée est un capteur de détection du déplacement de la tige de piston du vérin.

De préférence, le piston du vérin sépare le corps en deux chambres dites respectivement chambre de commande en ouverture et chambre de commande en fermeture, chaque chambre étant munie d'un orifice formant un orifice d'admission ou d'échappement de fluide en fonction de la position du distributeur, l'orifice de la chambre de commande en ouverture formant un orifice d'admission de fluide en première position du distributeur et un orifice d'échappement de fluide en deuxième et troisième positions du distributeur tandis que l'orifice de la chambre de commande en fermeture forme un orifice d'admission de fluide en deuxième position du distributeur et un orifice d'échappement de fluide en première et troisième positions du distributeur.

De préférence, les moyens de fermeture comprennent deux battants de porte ouvrant à la française. Cette configuration des moyens de fermeture s'avère la plus simple pour permettre une ouverture aisée des moyens de fermeture par simple poussée exercée par l'animal sur lesdits moyens de fermeture.

De préférence, le nid comprend un détecteur d'oeuf, des moyens d'identification de l'animal à l'intérieur de la cellule et des moyens de stockage des données fournies par les moyens d'identification de l'animal et par le détecteur d'oeuf.

Il en résulte une parfaite traçabilité de l'oeuf pondu et la possibilité de repérer les animaux pondeurs à rendement élevé.

L'invention a encore pour objet un procédé d'ouverture et de fermeture des moyens de fermeture de l'ouverture d'accès d'une cellule d'un nid individuel de ponte, selon la revendication 9.

Dans un mode de mise en oeuvre préféré du procédé, le nid comprenant en outre un détecteur d'oeuf, des moyens d'identification de l'animal et des moyens de stockage des données fournies par les moyens d'identification de l'animal et par le détecteur d'oeuf, ledit procédé comprend une étape d'identification de l'animal à l'intérieur de la cellule, une étape de détection d'un oeuf et une étape de stockage des données fournies par les moyens d'identification de l'animal et par le détecteur d'oeuf.

L'invention sera bien comprise à la lecture de la description suivante d'exemples de réalisation, en référence aux dessins annexés dans lesquels :
la figure 1 représente une vue en perspective d'une batterie de nids conformes à l'invention prise côté ouverture d'accès des nids ;

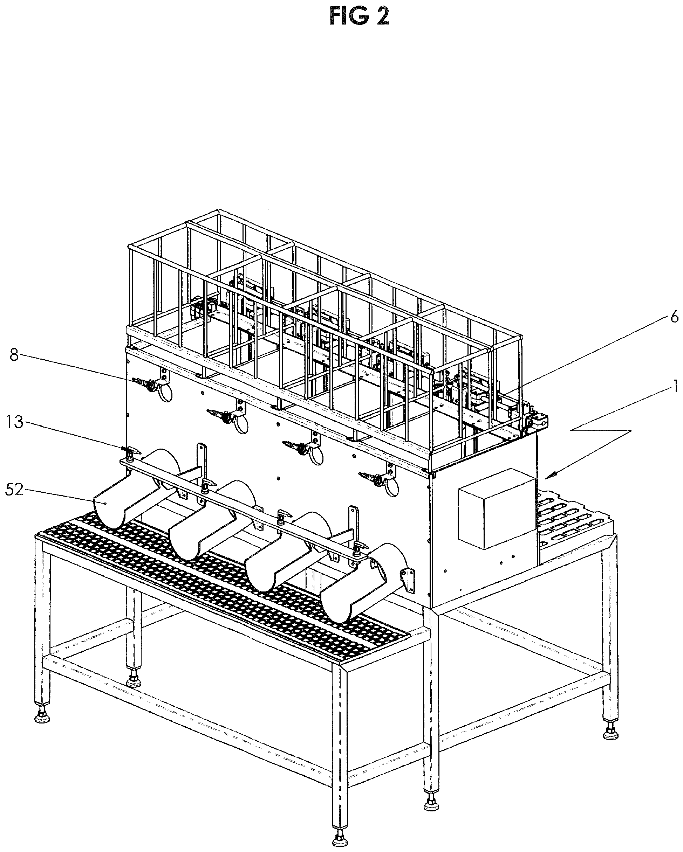

la figure 2 représente une vue en perspective d'une batterie de nids conformes à l'invention prise côté dos des nids, c'est-à-dire côté opposé à l'ouverture d'accès ;

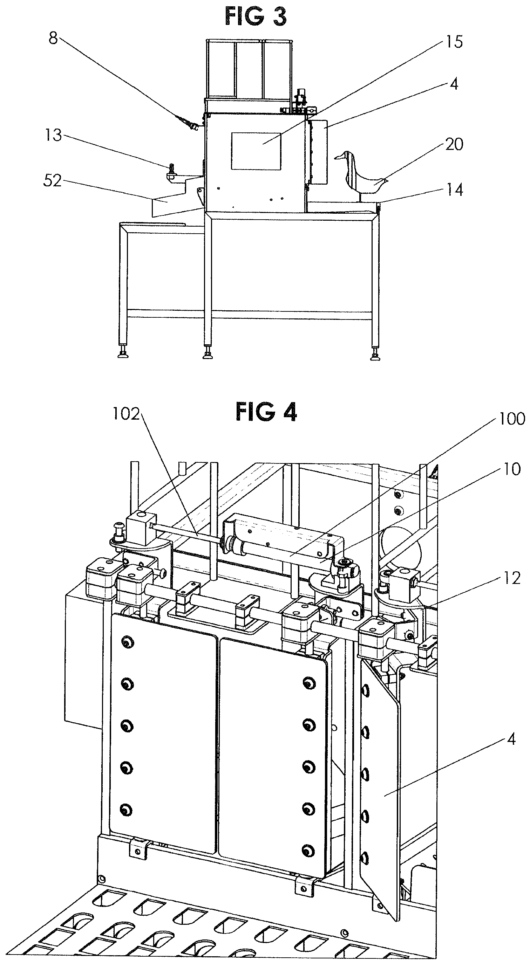

la figure 3 représente une vue schématique de côté d'un nid conforme à l'invention ;
la figure 4 représente une vue partielle d'une batterie de nids prise au niveau des moyens de commande en ouverture et en fermeture ;

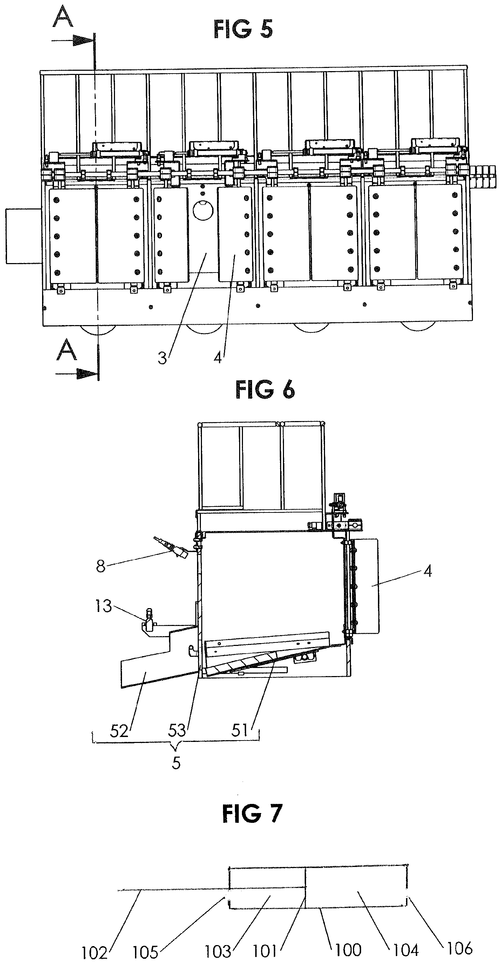

la figure 5 représente une vue de face d'une batterie de nids conformes à l'invention en position ouverte des moyens de fermeture d'un nid et fermée des moyens de fermeture des autres nids ;
la figure 6 représente une vue en coupe suivant AA de la figure 5 ;
la figure 7 représente une vue schématique simplifiée d'un vérin.

Comme mentionné ci-dessus, l'invention a pour objet un nid 1 individuel de ponte pour animaux, notamment pour palmipèdes ou volailles, élevés à des fins de sélection. Un tel nid comprend une cellule 2 munie d'une ouverture 3 d'accès, de moyens 4 de fermeture de l'ouverture 3 d'accès de ladite cellule et de moyens 5 d'évacuation des oeufs à l'extérieur de ladite cellule 2.

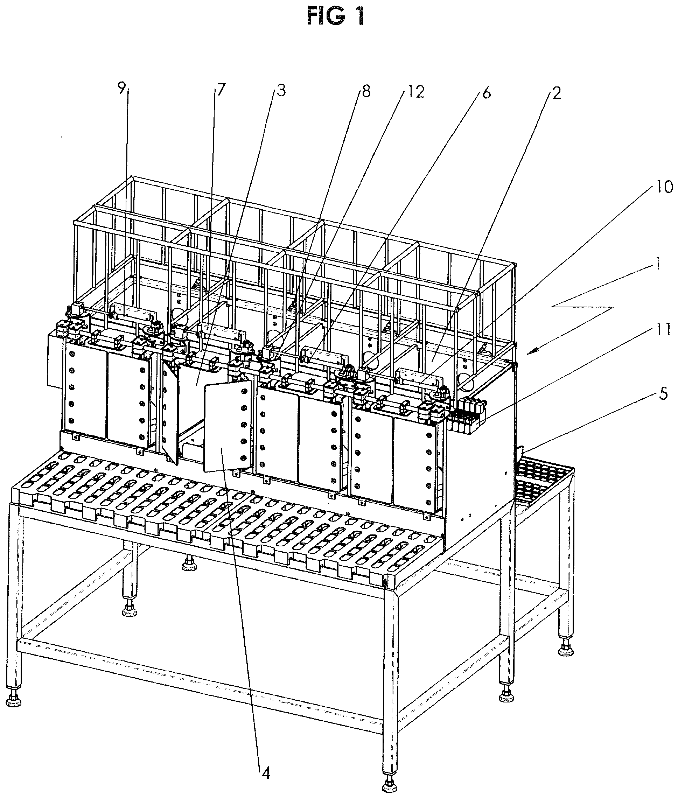

Dans l'exemple représenté à la figure 1, chaque nid 1 jouxte au moins un autre nid pour former une batterie de nids montés sur un bâti support commun. Comme ces nids sont identiques d'un nid à un autre, un seul nid va être décrit. Ce nid 1 comprend donc une cellule 2 de forme parallélépipédique. Cette cellule comprend une face du dessous formant le plancher de la cellule, une face du dessus formant le plafond de la cellule, cette face du dessus pouvant être au moins partiellement ouverte pour permettre à un opérateur l'accès par le dessus à ladite cellule, une face avant présentant l'ouverture 3 d'accès à ladite cellule, une face arrière et des faces latérales reliant entre elles les faces avant et arrière.

Les moyens 4 de fermeture de l'ouverture 3 d'accès comprennent deux battants de porte ouvrant à la française, c'est-à-dire montés chacun à pivotement autour d'un axe sensiblement vertical. Les moyens 5 d'évacuation des oeufs à l'extérieur de la cellule comprennent une partie 51 située à l'intérieur de la cellule 2 et une partie 52 située à l'extérieur de la cellule 2. Ces parties 51, 52 communiquent entre elles par une ouverture 53 dite d'évacuation ménagée dans la face dite arrière de la cellule opposée à la face avant de la cellule équipée de l'ouverture 3 d'accès de la cellule. La partie 51 des moyens 5 d'évacuation située à l'intérieur de la cellule est formée par le plancher incliné de la cellule à pente descendante en direction de l'ouverture 53 d'évacuation et la partie 52 des moyens 5 d'évacuation située à l'extérieur de la cellule est formée par une goulotte à pente descendante depuis l'ouverture 53 d'évacuation en direction de son extrémité libre.

Dans l'exemple représenté, le nid 1 comprend encore un détecteur 13 d'oeuf, des moyens 14 d'identification de l'animal à l'intérieur de la cellule 2 et des moyens 15 de stockage des données fournies par les moyens 14 d'identification de l'animal et par le détecteur 13 d'oeuf. Le détecteur 13 d'oeuf est configuré pour détecter les oeufs au niveau de la partie 52 des moyens 5 d'évacuation située à l'extérieur de la cellule. Ce détecteur 13 d'oeuf peut être formé par une cellule photoélectrique. Les moyens 14 d'identification de l'animal sont par exemple formés par un dispositif de radio-identification comprenant une puce de radio-identification dite RFID réalisée sous forme d'un bracelet porté par l'animal et au moins une antenne placée de préférence sous le nid. Ainsi, chaque oeuf détecté peut être associé à l'animal identifié.

Le nid comprend encore des moyens 6 de commande en fermeture des moyens 4 de fermeture pour le passage en position fermée des moyens 4 de fermeture, des moyens 7 de commande en ouverture des moyens 4 de fermeture pour le passage en position ouverte des moyens 4 de fermeture, un capteur 8 de présence, apte à détecter la présence d'un animal dans ladite cellule 2 et un capteur 9 de détection de poussée configuré pour détecter une poussée exercée sur les moyens 4 de fermeture dans le sens d'une ouverture en position fermée desdits moyens 4 de fermeture. Les moyens 6 de commande en fermeture sont activables en position ouverte des moyens 4 de fermeture et, à l'état activé du capteur 8 de présence, c'est-à-dire après détection par ledit capteur 8 de la présence d'un animal à l'intérieur de la cellule. Ils sont configurés pour permettre, à l'état activé, le passage des moyens 4 de fermeture en position fermée dans laquelle les moyens 4 de fermeture sont libres de passer de la position fermée à la position ouverte par poussée exercée par l'animal 20 sur lesdits moyens 4 de fermeture.

A contrario, les moyens 6 de commande en fermeture sont, en position ouverte des moyens 4 de fermeture et à l'état désactivé ou non sollicité du capteur 8 de présence, configurés pour être inactifs sur lesdits moyens 4 de fermeture pour permettre un maintien en position ouverte des moyens 4 de fermeture. Les moyens 7 de commande en ouverture sont quant à eux configurés pour être activés à l'état activé du capteur 9 de détection de poussée. Ces moyens 7 de commande en ouverture sont configurés pour permettre le passage des moyens 4 de fermeture dans une position ouverte stable, c'est-à-dire dans une position ouverte dans laquelle les moyens 4 de fermeture peuvent être maintenus. Les moyens 7 de commande en ouverture des moyens 4 de fermeture sont configurés pour permettre seuls, à l'état activé du capteur 9 de détection de poussée, le passage des moyens 4 de fermeture de la position fermée à la position ouverte. Ces moyens 7 de commande en ouverture peuvent donc se substituer à l'animal ou assister l'animal pendant la phase d'ouverture des moyens 4 de fermeture.

Dans l'exemple représenté, le capteur 8 de présence d'un animal dans la cellule est formé par une cellule infrarouge placée à l'extérieur de la cellule côté dos de la cellule. Cette cellule infrarouge vise l'intérieur de la cellule à travers une ouverture ménagée dans la face arrière de la cellule. Le capteur 9 de détection de poussée est ici intégré aux moyens 6 de commande en fermeture. Les moyens 6 de commande en fermeture et les moyens 7 de commande en ouverture des moyens 4 de fermeture sont au moins partiellement communs. Les moyens 7 de commande en ouverture et les moyens 6 de commande en fermeture des moyens 4 de fermeture comprennent un actionneur 10 associé à un distributeur 11 à trois positions. Les moyens 7 de commande en ouverture sont formés par l'actionneur 10 et le distributeur 11 en première position tandis que les moyens 6 de commande en fermeture sont formés par l'actionneur 10 et le distributeur 11 en deuxième et en troisième positions. Le distributeur est donc apte à prendre successivement la première, puis la deuxième, puis la troisième position en fonction des signaux fournis par le capteur 8 de présence et le capteur 9 de détection de poussée.

Dans l'exemple représenté, l'actionneur 10 est un vérin double effet comprenant un corps 100, un piston 101 et une tige 102 de piston.

Le capteur 9 de détection de poussée est configuré pour détecter un déplacement de la tige 102 de piston du vérin.

En particulier, le piston 101 du vérin sépare le corps en deux chambres dites respectivement chambre 103 de commande en ouverture et chambre 104 de commande en fermeture. Chaque chambre 103 ; 104 est munie d'un orifice 105 ; 106 formant un orifice d'admission ou d'échappement de fluide en fonction de la position du distributeur 11. L'orifice 105 de la chambre 103 de commande en ouverture forme un orifice d'admission de fluide en première position du distributeur 11 et un orifice d'échappement de fluide en deuxième et troisième positions du distributeur 11 tandis que l'orifice 106 de la chambre 104 de commande en fermeture forme un orifice d'admission de fluide en deuxième position du distributeur 11 et un orifice d'échappement de fluide en première et troisième positions du distributeur 11.

Le vérin, constitutif de l'actionneur, se présente donc sous forme d'un élément allongé s'étendant entre deux pièces 12 formant came de commande en ouverture et en fermeture des moyens de fermeture par contact d'appui direct ou indirect avec les moyens 4 de fermeture. Chaque pièce 12, couplée audit vérin, est, par l'intermédiaire du vérin, montée mobile à pivotement autour d'un axe parallèle ou confondu avec l'axe de pivotement des battants suivant une direction fonction de la rentrée ou de la sortie de la tige du vérin. Le vérin est en position sortie de la tige en position fermée des moyens de fermeture, et en position rentrée de la tige en position ouverte des moyens de fermeture, dans l'exemple représenté. Le capteur 9 de détection de poussée, qui est configuré pour détecter un déplacement de la tige 102 de piston du vérin, en particulier une sortie de la tige de piston du vérin, est quant à lui formé par un électroaimant entourant la tige du vérin.

Le fonctionnement des moyens de commande est le suivant. On suppose que les moyens 4 de fermeture sont en position ouverte et le distributeur est en première position d'alimentation de la chambre de commande en ouverture du vérin. Lorsque le capteur 8 de présence détecte un animal dans la cellule, le distributeur est amené en deuxième position, dans laquelle il alimente la chambre de commande en fermeture du vérin. Les battants de porte sont donc entraînés en déplacement dans le sens d'une fermeture par le vérin jusqu'à une position fermée des moyens de fermeture dans laquelle le distributeur est amené en troisième position, position dans laquelle les deux chambres du vérin sont à l'échappement pour permettre un montage flottant ou libre des moyens 4 de fermeture. Ce montage flottant autorise les moyens de fermeture à se déplacer dans le sens d'une ouverture sous l'action d'une poussée exercée sur les moyens de fermeture par l'animal logé à l'intérieur de la cellule lorsqu'il décide de sortir de la cellule. Cette poussée, qui génère un début de sortie de la tige du vérin, est détectée par le capteur 9 de détection de poussée. Cette détection entraîne l'entraînement en déplacement du distributeur en première position et la commande en ouverture des moyens de fermeture. Un nouveau cycle d'ouverture/fermeture peut alors être envisagé avec un nouvel animal. Lorsque l'animal est dans la cellule, s'il pond un oeuf, cet oeuf est évacué de la cellule par les moyens 5 d'évacuation décrits ci-dessus. Au cours de son évacuation, l'oeuf active le détecteur 13 d'oeuf. Cette information du détecteur et des données d'identification de l'animal sont recueillies et stockées à des fins de traitement.

## Revendications

1. Nid (1) individuel de ponte pour animaux (20) pondeurs comprenant une cellule (2) munie d'une ouverture (3) d'accès, des moyens (4) de fermeture de l'ouverture (3) d'accès de ladite cellule, des moyens (5) d'évacuation des oeufs à l'extérieur de ladite cellule (2), des moyens (6) de commande en fermeture des moyens (4) de fermeture pour le passage en position fermée des moyens (4) de fermeture, des moyens (7) de commande en ouverture des moyens (4) de fermeture pour le passage en position ouverte des moyens (4) de fermeture, un capteur (8) de présence, apte à détecter la présence d'un animal dans ladite cellule (2) et un capteur (9) de détection de poussée configuré pour détecter une poussée exercée sur les moyens (4) de fermeture dans le sens d'une ouverture en position fermée desdits moyens (4) de fermeture, dans lequel les moyens (6) de commande en fermeture sont configurés pour, en position ouverte des moyens (4) de fermeture et à l'état activé du capteur (8) de présence permettre le passage des moyens (4) de fermeture en position fermée, lesdits moyens (4) de fermeture sont, dans la position fermée, montés libres de passer de la position fermée à la position ouverte par poussée exercée par l'animal (20) sur lesdits moyens (4) de fermeture, et les moyens (6) de commande en ouverture sont configurés pour être activés à l'état activé du capteur (9) de détection de poussée, les moyens (7) de commande en ouverture et les moyens (6) de commande en fermeture des moyens (4) de fermeture comprenant un actionneur (10) associé à un distributeur (11) à trois positions, les moyens (7) de commande en ouverture étant formés par l'actionneur (10) et le distributeur (11) en première position tandis que les moyens (6) de commande en fermeture sont formés par l'actionneur (10) et le distributeur (11) en deuxième et en troisième positions.

2. Nid (1) selon la revendication 1,
**caractérisé en ce que** les moyens (7) de commande en ouverture et les moyens (6) de commande en fermeture des moyens (4) de fermeture sont au moins partiellement communs.

3. Nid (1) selon l'une des revendications précédentes,
**caractérisé en ce que** le capteur (9) de détection de poussée est intégré aux moyens (6) de commande en fermeture.

4. Nid (1) selon la revendication 1, **caractérisé en ce que** l'actionneur (10) est un vérin double effet comprenant un corps (100), un piston (101), une tige (102) de piston.

5. Nid (1) selon la revendication 4, **caractérisé en ce que** le capteur (9) de détection de poussée est un capteur de détection du déplacement de la tige (102) de piston du vérin.

6. Nid (1) selon la revendication 4, **caractérisé en ce que** le piston (101) du vérin sépare le corps en deux chambres dites respectivement chambre (103) de commande en ouverture et chambre (104) de commande en fermeture, chaque chambre (103 ; 104) étant munie d'un orifice (105 ; 106) formant un orifice d'admission ou d'échappement de fluide en fonction de la position du distributeur (11), l'orifice (105) de la chambre (103) de commande en ouverture formant un orifice d'admission de fluide en première position du distributeur (11) et un orifice d'échappement de fluide en deuxième et troisième positions du distributeur (11) tandis que l'orifice (106) de la chambre (104) de commande en fermeture forme un orifice d'admission de fluide en deuxième position du distributeur (11) et un orifice d'échappement de fluide en première et troisième positions du distributeur (11).

7. Nid (1) selon l'une des revendications précédentes, **caractérisé en ce que** les moyens (4) de fermeture comprennent deux battants de porte ouvrant à la française.

8. Nid (1) selon l'une des revendications précédentes, **caractérisé en ce que** le nid (1) comprend un détecteur (13) d'oeuf, des moyens (14) d'identification de l'animal à l'intérieur de la cellule (2) et des moyens (15) de stockage des données fournies par les moyens (14) d'identification de l'animal et par le détecteur (13) d'oeuf.

9. Procédé d'ouverture et de fermeture des moyens (4) de fermeture de l'ouverture (3) d'accès d'une cellule (2) d'un nid (1) individuel de ponte selon la revendication 1, ledit nid (1) étant équipé de moyens (5) d'évacuation des oeufs à l'extérieur de ladite cellule (2), de moyens (6) de commande en fermeture des moyens (4) de fermeture pour le passage en position fermée des moyens (4) de fermeture, de moyens (7) de commande en ouverture des moyens (4) de fermeture pour le passage en position ouverte des moyens (4) de fermeture, d'un capteur (8) de présence d'un animal dans ladite cellule (2) et d'un capteur (9) de détection de poussée configuré pour détecter une poussée exercée sur les moyens (4) de fermeture dans le sens d'une ouverture en position fermée desdits moyens (4) de fermeture et en ce que les moyens (4) de fermeture étant en position ouverte, ledit procédé comprend :
- une étape de détection d'un animal (20) à l'intérieur de la cellule (2)
- une étape de commande en fermeture des moyens (4) de fermeture jusqu'à une position fermée dans laquelle les moyens (4) de fermeture sont montés libres de passer de la position fermée à la position ouverte pour permettre l'ouverture des moyens (4) de fermeture par simple poussée exercée par l'animal sur lesdits moyens (4) de fermeture,
- une étape de détection d'une poussée exercée par l'animal sur les moyens (4) de fermeture, dans le sens d'une ouverture desdits moyens (4) de fermeture,
- une étape de commande en ouverture des moyens (4) de fermeture à l'aide desdits moyens de commande en ouverture jusqu'à une position ouverte.

## Patentansprüche

1. Individuelles Legenest (1) für Legetiere (20), umfassend eine Zelle (2), die mit einer Zugangsöffnung (3), Verschlussmittel (4) der Zugangsöffnung (3) der Zelle versehen ist, Mittel (5) zur Entfernung der Eier aus der Zelle (2), Mittel (6) zur Steuerung des Verschlusses der Verschlussmittel (4) für den Übergang in die geschlossene Position (4) der Verschlussmittel (4), Mittel (7) zur Steuerung der Öffnung der Verschlussmittel (4) für den Übergang in die offene Position (4) der Verschlussmittel, einen Anwesenheitssensor (8), der ausgelegt ist, um die Anwesenheit eines Tiers in der Zelle (2) nachzuweisen, und einen Sensor (9) zum Nachweis eines Drucks, der konfiguriert ist, um einen Druck nachzuweisen, der auf die Verschlussmittel (4) in Richtung einer Öffnung in geschlossener Position der Verschlussmittel (4) ausgeübt wird, wobei die Mittel (6) zur Steuerung des Verschlusses konfiguriert sind, um, in der offenen Position (4) der Verschlussmittel (4) und im aktivierten Zustand des Anwesenheitssensors (8), den Übergang der Verschlussmittel (4) in die geschlossene Position zu ermöglichen, wobei die Verschlussmittel (4) in der geschlossenen Position frei montiert sind, um von der geschlossenen Position in die offene Position durch Druck überzugehen, der vom Tier (20) auf die Verschlussmittel (4) ausgeübt wird, und die Mittel (6) zur Steuerung der Öffnung konfiguriert sind, um im aktivierten Zustand des Sensors (9) zum Nachweis von Druck aktiviert zu werden, wobei die Mittel (7) zur Steuerung der Öffnung und die Mittel (6) zur Steuerung des Verschlusses der Verschlussmittel (4) eine Betätigungsvorrichtung umfassen, die mit einem Verteiler (11) mit drei Positionen assoziiert ist, wobei die Mittel (7) zur Steuerung der Öffnung durch die Betätigungsvorrichtung (10) und den Verteiler (11) in erster Position gebildet sind, während die Mittel (6) zur Steuerung des Verschlusses von der Betätigungsvorrichtung (10) und dem Verteiler (11) in der zweiten und in der dritten Position gebildet sind.

2. Nest (1) nach Anspruch 1, **dadurch gekennzeichnet, dass** die Mittel (7) zur Steuerung der Öffnung und die Mittel (6) zur Steuerung des Verschlusses der Verschlussmittel (4) mindestens teilweise gemeinsam sind.

3. Nest (1) nach einem der vorhergehenden Ansprüche, **dadurch gekennzeichnet, dass** der Sensor (9) zum Nachweis eines Drucks in die Mittel (6) zur Steuerung des Verschlusses integriert sind.

4. Nest (1) nach Anspruch 1, **dadurch gekennzeichnet, dass** die Betätigungsvorrichtung (10) eine Winde mit doppelter Wirkung ist, umfassend einen Körper (100), einen Kolben (101), eine Kolbenstange (102).

5. Nest (1) nach Anspruch 4, **dadurch gekennzeichnet, dass** der Sensor (9) zum Nachweis eines Drucks ein Sensor zum Nachweise der Verschiebung der Kolbenstange (102) der Winde ist.

6. Nest (1) nach Anspruch 4, **dadurch gekennzeichnet, dass** der Kolben (101) der Winde den Körper in zwei Kammern trennt, bezeichnet jeweils als Kammer (103) zur Steuerung der Öffnung und Kammer (104) zur Steuerung des Verschlusses, wobei jede Kammer (103; 104) mit einer Öffnung (105; 106) ausgestattet ist, die eine Zugangs- oder Auslassöffnung von Fluid je nach der Position des Verteilers (11) bildet, wobei die Öffnung (105) der Kammer (103) zur Steuerung der Öffnung eine Zugangsöffnung von Fluid in der ersten Position des Verteilers (11) und eine Auslassöffnung von Fluid in der zweiten und dritten Position des Verteilers (11) bildet, während die Öffnung (106) der Kammer (104) zur Steuerung des Verschlusses eine Zugangsöffnung von Fluid in der zweiten Position des Verteilers (11) und eine Auslassöffnung von Fluid in der ersten und dritten Position des Verteilers (11) bildet.

7. Nest (1) nach einem der vorhergehenden Ansprüche, **dadurch gekennzeichnet, dass** die Verschlussmittel (4) zwei Türflügel mit Stulpausführung umfassen.

8. Nest (1) nach einem der vorhergehenden Ansprüche, **dadurch gekennzeichnet, dass** das Nest (1) eine Vorrichtung zum Nachweis (13) von Eiern, Mittel (14) zur Identifizierung des Tiers im Inneren der Zelle (2) und Mittel (15) zum Speichern der Daten umfasst, die von den Mitteln (14) zur Identifizierung des Tiers und durch die Vorrichtung zum Nachweis von Eiern (13) geliefert werden.

9. Verfahren zum Öffnen und Schließen der Verschlussmittel (4) der Zugangsöffnung (3) einer Zelle (2) eines individuellen Legenests nach Anspruch 1, wobei das Nest (1) mit Mitteln (5) zur Entfernung der Eier aus der Zelle (2), Mitteln (6) zur Steuerung des Verschlusses der Verschlussmittel (4) für den Übergang in der geschlossenen Position (4) der Verschlussmittel (4), Mittel (7) zur Steuerung der Öffnung der Verschlussmittel (4) für den Übergang in die offene Position der Verschlussmittel (4), einem Anwesenheitssensors (8) eines Tiers in der Zelle (2) und einem Sensors (9) zum Nachweis des Drucks ausgestattet ist, der konfiguriert ist, um einen Druck nachzuweisen, der auf die Verschlussmittel (4) in Richtung einer Öffnung in geschlossener Position der Mittel (4) zum Verschluss ausgeübt wird, und dadurch, dass die Verschlussmittel (4) in der offenen Position sind, wobei das Verfahren Folgendes umfasst:
- einen Schritt des Nachweisens eines Tiers (20) im Inneren der Zelle (2),
- einen Schritt des Steuerns des Verschlusses der Verschlussmittel (4) bis in eine geschlossene Position, in der die Verschlussmittel (4) frei montiert sind, um von der geschlossenen Position in die offene Position überzugehen, um die Öffnung der Verschlussmittel (4) durch einen einfachen Druck zu ermöglichen, der vom Tier auf die Verschlussmittel (4) ausgeübt wird,
- einen Schritt des Nachweisens eines Drucks, der vom Tier auf die Verschlussmittel (4) in der Richtung einer Öffnung der Verschlussmittel (4) ausgeübt wird,
- einen Schritt des Steuerns der Öffnung der Verschlussmittel (4) mit Hilfe der Mittel zur Steuerung der Öffnung bis in eine offene Position.

## Claims

1. An individual laying nest (1) for laying animals (20) comprising a cell (2) provided with an access opening (3), means (4) for closing the access opening (3) of said cell, means (5) for discharging eggs outside said cell (2), means (6) for controlling the closing of the closing means (4) for the passage to the closed position of the closing means (4), means (7) for controlling the opening of the closing means (4) for the passage to the open position of the closing means (4), a presence sensor (8), able to detect the presence of an animal in said cell (2) and a sensor (9) for detecting pressing configured to detect pressing exerted on the closing means (4) in the direction of an opening in the closed position of said closing means (4), wherein the closing control means (6) are configured, in the open position of the closing means (4) and the activated state of the presence sensor (8), to allow the passage of the closing means (4) to the closed position, said closing means (4) are, in the closed position, mounted free to go from the closed position to the open position by pushing exerted by the animal (20) on said closing means (4), and said opening control means (6) are configured to be activated in the activated state of the pushing detection sensor (9), the opening control means (7) and the closing control means (6) of the closing means (4) comprising an actuator (10) associated with a distributor (11) with three positions, the opening control means (7) being formed by the actuator (10) and the distributor (11) in the first position while the closing control means (6) are formed by the actuator (10) and the distributor (11) in the second and third positions.

2. The nest (1) according to claim 1,
**characterized in that** the opening control means (7) and the closing control means (6) of the closing means (4) are at least partially shared.

3. The nest (1) according to one of the preceding claims,
**characterized in that** the pushing detection sensor (9) is integrated into the closing control means (6).

4. The nest (1) according to claim 1,
**characterized in that** the actuator (10) is a double-acting jack comprising a body (100), a piston (101), a piston rod (102).

5. The nest (1) according to claim 4,
**characterized in that** the pushing detection sensor (9) is a sensor detecting the movement of the piston rod (102) of the jack.

6. The nest (1) according to claim 4,
**characterized in that** the piston (101) of the jack separates the body into two chambers respectively called opening control chamber (103) and closing control chamber (104), each chamber (103, 104) being provided with an orifice (105; 106) forming a fluid intake or discharge orifice as a function of the position of the distributor (11), the orifice (105) of the opening control chamber (103) forming a fluid intake orifice in the first position of the distributor (11) and a fluid discharge orifice in the second and third positions of the distributor (11) while the orifice (106) of the closing control chamber (104) forms a fluid intake orifice in the second position of the distributor (11) and a fluid discharge orifice in the first and third positions of the distributor (11).

7. The nest (1) according to one of the preceding claims,
**characterized in that** the closing means (4) comprise two door flaps opening like French doors.

8. The nest (1) according to one of the preceding claims,
**characterized in that** the nest (1) comprises an egg detector (13), means (14) for identifying the animal inside the cell (2) and means (15) for storing data provided by the means (14) for identifying the animal and by the egg detector (13).

9. A method for the opening and closing of closing means (4) for the access opening (3) of a cell (2) of an individual laying nest (1) according to claim 1, said nest (1) being equipped with means (5) for discharging eggs outside said cell (2), means (6) for controlling closing of the closing means (4) for the passage to the closed position of the closing means (4), means (7) for controlling opening of the closing means (4) for the passage to the open position of the closing means (4), a sensor (8) for detecting the presence of an animal in said cell (2) and a sensor (9) detecting pushing configured to detect pushing exerted on the closing means (4) in the direction of opening in the closed position of said closing means (4) and in that the closing means (4) being in the open position, said method comprises:
- a step for detecting an animal (20) inside the cell (2),
- a step for controlling closing of the closing means (4) to a closed position in which the closing means (4) are mounted free to go from the closed position to the open position in order to allow the opening of the closing means (4) by simple pushing exerted by the animal on said closing means (4),
- a step for detecting pushing exerted by the animal on the closing means (4), in the direction of an opening of said closing means (4),
- a step for controlling opening of the closing means (4) using said opening control means to an open position.
